# EUROPÄISCHE PATENTSCHRIFT

(11) **EP 1 078 439 B1**
(45) Veröffentlichungstag und Bekanntmachung des Hinweises auf die Patenterteilung: **22.10.2003**
(21) Anmeldenummer: 99929081.0
(22) Anmeldetag: 03.05.1999
(51) Int. Cl.: H02K 5/14

(54) **KOMMUTATORMOTOR MIT MONTAGE-RÜCKHALTERUNG DER BÜRSTEN**
COMMUTATOR MOTOR WITH A BRUSH RETENTION DEVICE FOR ASSEMBLY
MOTEUR ELECTRIQUE A COLLECTEUR AVEC ELEMENT DE RETENUE DES BALAIS POUR LE MONTAGE

(30) Priorität: 11.05.1998 DE 19821053
(43) Veröffentlichungstag der Anmeldung: 28.02.2001
(73) Patentinhaber: SIEMENS AKTIENGESELLSCHAFT, 80333 München (DE)
(72) Erfinder: STEINBART, Dagmar, D-97078 Würzburg (DE); SEUFFERT, Werner, D-97493 Bergrheinfeld (DE)
(86) Internationale Anmeldenummer: DE9901296
(87) Internationale Veröffentlichungsnummer: WO99059234

(56) Entgegenhaltungen:
- FR-A- 2 625 628
- US-A- 5 444 320
- PATENT ABSTRACTS OF JAPAN vol. 1996, no. 11, 29. November 1996 (1996-11-29) -& JP 08 186957 A (CALSONIC CORP), 16. Juli 1996 (1996-07-16)

## Beschreibung

Die Erfindung bezieht sich auf einen Kommutatormotor mit Montage-Rückhalterung der Bürsten ; derartige Kommutatormotoren sind insbesondere als Antriebsmotoren für Motor-Pumpen-Aggregate in automatischen Bremssystemen (ABS) in Kraftfahrzeugen vorgesehen und müssen gegen das Eindringen von Feuchtigkeit geschützt sein.

Bei einem, z.B. durch die EP 0 682 398 B1 bekannten, Motor-Pumpen-Aggregat, insbesondere für einen ABS-Antrieb, ist einerseits zur Abdichtung ein topfförmiges Motorgehäuse vorgesehen und andererseits das mit seiner offenen Topfrandseite axial gegen das Pumpengehäuse anliegende Motorgehäuse stirnseitig durch eine Bürstentragplatte abgedichtet, derart daß die auf der Motorinnenseite von der Bürstentragplatte aufgenommenen Bürsten beim Einbau in das zuvor mit dem Rotor einschließlich des Kommutators bestückte Motorgehäuse nicht zugänglich sind.

Durch die DE 42 35 962 C2 ist ein feuchtigkeitsdicht geschlossener Kommutatormotor mit einem axial. angeflanschten Antriebsgehäuse bekannt, wobei eine Bürstentragplatte mit gegen den Kommutator verschiebbaren Bürsten zwischen den Stirnflächen des Motorgehäuses und des Antriebsgehäuses angeordnet und zugleich als feuchtigkeitsdichtendes Flachdichtungselement zwischen den Stirnflächen des Motorgehäuses und des Antriebsgehäuses ausgebildet ist.

Durch die US-A-5 444 320 ist ein Montageverfahren für einen Kommutatormotor bekannt, bei dem die Bürsten durch eine den Kommutator umgebende Hülse zunächst in einer Montage-Rückhaltestellung festgehalten und nach der Montage des Rotors durch axiale Verschiebung der Hülse in ihre Betriebs-Endstellung freigegeben werden.

Gemäß Aufgabe vorliegender Erfindung soll bei gewährleistetem Feuchtigkeitsschutz, insbesondere bei gegen das Eindringen von Leckflüssigkeit geschütztem Kommutator, trotzdem eine einfache, für eine Massen-Serien-Fertigung geeignete, Montage von rotorseitigem Kommutator einerseits und statorseitiger, bereits auf ihrer kommutatorzugewandten, unzugänglichen Innenseite mit Bürsten bestückter, Bürstentragplatte andererseits möglich sein.

Die Lösung dieser Aufgabe gelingt erfindungsgemäß durch einen Kommutatormotor mit einer Kombination von Feuchtigkeitsschutz und Montagerückhalterung der Bürsten gegenüber dem Kommutator gemäß Patentanspruch 1; vorteilhafte Ausgestaltungen der Erfindung sind jeweils Gegenstand der Unteransprüche.

Durch eine die Bürstenschleiffläche des Kommutators in geringem radialen Abstand umgebende Schutzhülse ist die Bürstenschleiffläche gegenüber einer trotz geschlossener Bürstenhalterung gegebenenfalls eintretenden Feuchtigkeit bzw. Leckflüssigkeit zusätzlich geschützt, wobei aufgrund der axialen Verschiebbarkeit der Schutzhülse diese dazu benutzt werden kann, die Bürsten bei dem gegenseitigen axialen Zusammenbau von rotorseitigem Kommutator einerseits und Bürstenhalterung andererseits in einer den axialen Zusammenbau nicht behindernden Montage-Rückhaltestellung zu sichern und die Bürsten erst beim gegenseitigen Zusammenbau der Bauteileinheiten Kommutator mit Rotor einerseits und Bürstentragplatte mit vormontierten Bürsten andererseits in ihre Betriebsstellung mit Auflage auf der Bürstenschleiffläche selbsttätig freizugeben.

Um einerseits bei kompakter Baugröße eine selbsttätige axiale Verschiebung der Schutzhülse aus ihrer Rückhaltestellung in ihre Betriebs-Endstellung zu erreichen und andererseits trotz einer bei Massen-Serien-Produkten hinzunehmenden Rundlauftoleranz einen schleiffreien Betrieb zwischen dem rotierenden Kommutator einerseits und der ruhenden umgebenden Schutzhülse andererseits gewährleisten zu können, ist nach einer Ausgestaltung der Erfindung eine Schutzhülse mit einem im Bereich ihrer Bürstenrückhalterung geringerem radialen Abstand zur Bürstenschleiffläche des Kommutators als in einem für die eigentliche Schutzabdeckung vorgesehenen Bereich vorgesehen. Zweckmäßigerweise ist die Schutzhülse, vorzugsweise mittels Schaberippen, im Klemm-Schiebesitz axial verschiebbar in der Bürstenhalterung gesichtert; dadurch ist einerseits eine leichte axiale Verschiebung der Schutzhülle bei der gegenseitigen Montage von Kommutator und Bürstenhalterung möglich und andererseits trotzdem eine gegen betriebsmäßige Erschütterungen sichere Fixierung der Schutzhülse in der Betriebs-Endstellung gewährleistet.

Die axiale Verschiebung der Schutzhülse von ihrer die Bürsten zurückhaltenden Montage-Rückhaltestellung in ihre die Bürsten freigebenden Betriebs-Endstellung erfolgt in besonders einfacher Weise durch Anschlag des Kommutators an die freie Stirnseite der Schutzhülse und axiale Mitverschiebung der Schutzhülse bei der relativen Montagebewegung zwischen dem Kommutator und der Bürstenhalterung.

Die Erfindung sowie vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:
- FIG 1: einen axialen Schnitt durch einen zum Antrieb eines Motor-Pumpen-Agggregats für einen ABS-Antrieb vorgesehenen Elektromotor;
- FIG 2: den Schnitt durch den Elektromotor gemäß FIG 1 im Schnittverlauf II-II;
- FIG 3: in perspektivischer Darstellung die Bürstenhalterung mit der Schutzhülse in ihrer die Bürsten zurückhaltenen Montage-Rückhaltestellung;
- FIG 4: einen axialen Schnitt durch die Bürstenhalterung gemäß FIG 3;

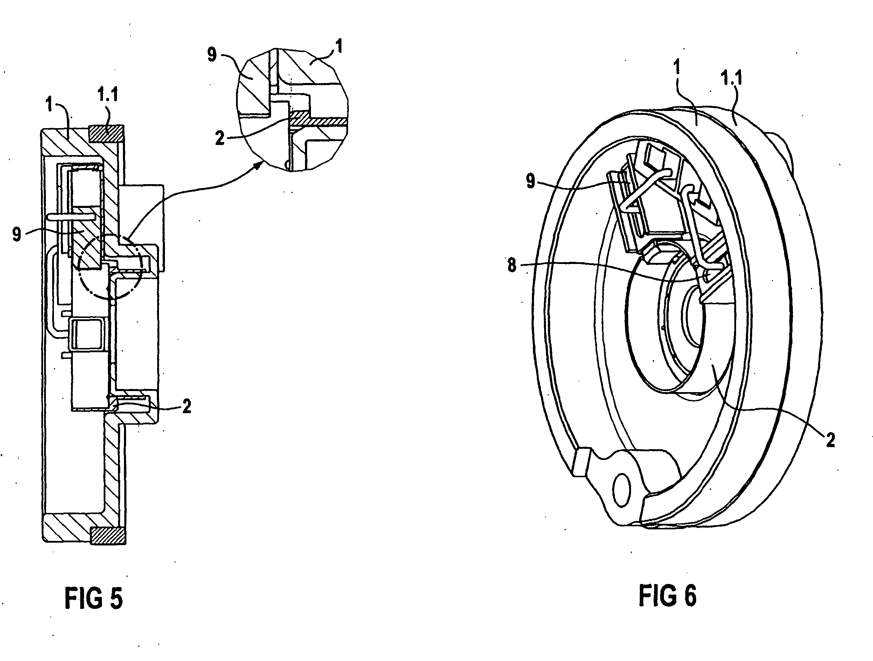

- FIG 5: in perspektivischer Darstellung die Bürstenhalterung mit der Schutzhülse in ihrer die Bürsten freigebenden Betriebs-Endstellung;
- FIG 6: einen axialen Schnitt durch die Bürstenhalterung gemäß FIG 5;
- FIG 7: in vergrößerter perspektivischer Darstellung die Schutzhülse.

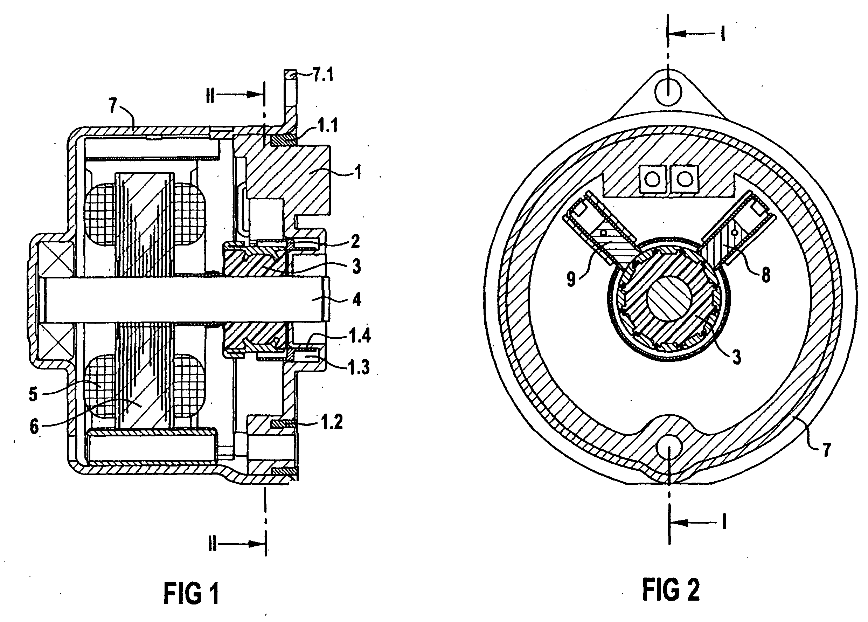

FIG 1, 2 zeigen einen Kommutatormotor mit topfförmigem Gehäuse 7, das mit seiner offenen Topfrandseite 7.1 an ein hier nicht dargestelltes Pumpengehäuse anflanschbar ist. Die offene Topfrandseite 7.1 des Motorgehäuses 7 ist durch ein stirnseitig geschlossenes und gegen das Topfgehäuses 7 mittels Dichtung 1.1;1.2 abgedichtete Bürstenhalterung 1 abgeschlossen. In der Bürstenhalterung 1 sind Bürsten 8;9 führbar gehalten, die in ihrer Betriebsendstellung gemäß FIG 2 auf der durch Lamellen gebildeten Bürstenschleiffläche des Kommutators 3 aufliegen. Der Kommutator 3 wird von einer mit ihrem linken Ende im Motorgehäuse 7 drehbar gelagerten Rotorwelle 4 aufgenommen, die auch ein mit einer Wicklung 5 versehenes Rotorblechpaket 6 trägt; das rechte Ende der Rotörwelle 4 ragt in hier nicht näher dargestellter Weise in das axial anschließende Pumpengehäuse, ist dort drehbar gelagert und treibt Pumpenstößel der Hydraulikpumpe an.

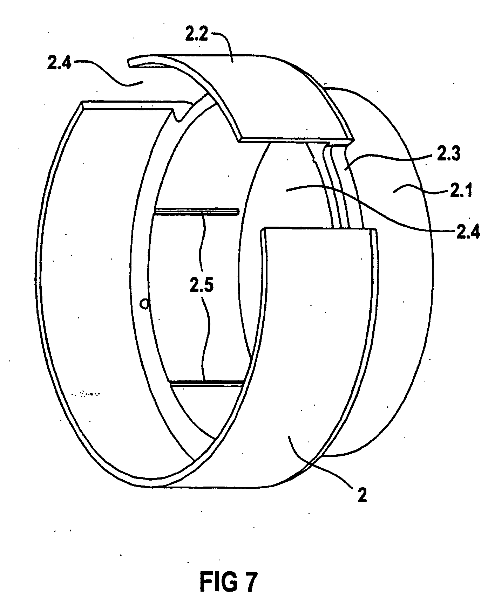

Die in FIG 7 vergrößert dargestellte Schutzhülse 2 greift an ihrer rechten Stirnseite mit einem radial nach innen versetzten Führungs- bzw. Fixierungsbereich 2.1 in eine axial eintauchende ringnutartige Aufnahme 1.3 der Bürstenhalterung 1 ein und ist auf einem entsprechenden Absatz 1.4 der Bürstenhalterung 1 im Klemm-Schiebesitz axial führbar gehalten. Die ringnutartige Aufnahme 1.3 wirkt zusammen mit dem axial eingesteckten Führungs- bzw. Fixierungsbereich 2.1 der Schutzhülse 2 als ein das ungewollte Eindringen von Leckflüssigkeit behinderndes Labyrinth. In vorteilhafter Weise ist die Schutzhülse 2 in ihrem Führungs- bzw. Fixierungsbereich 2.1 an ihrer Innenwandung mit Schaberippen 2.5 versehen, die den Klemm-Schiebesitz begünstigen.

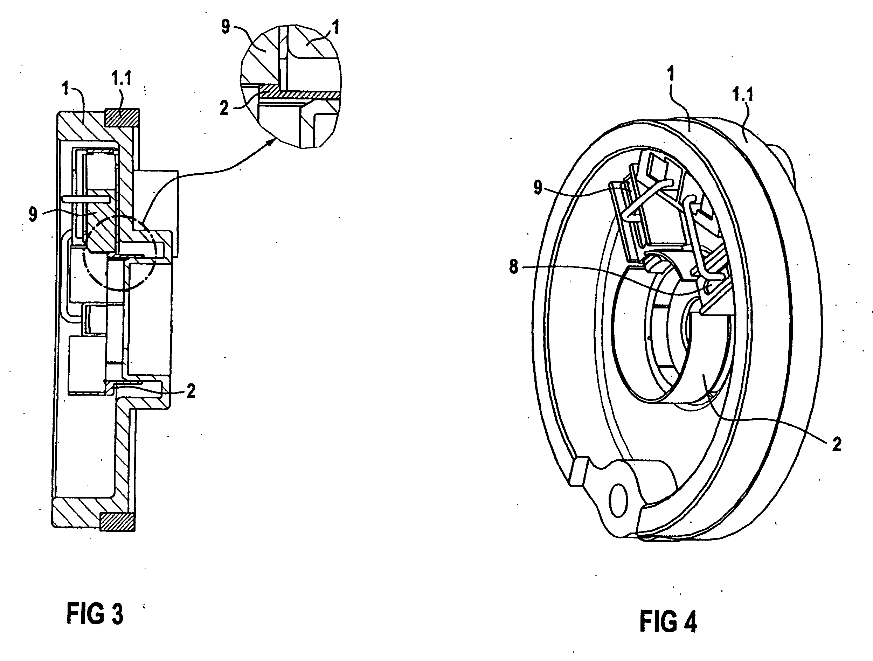

An den nach radial innen abgesetzten Führungs- bzw. Fixierungsbereich 2.1 schließt sich ein radial weiter nach außen reichender Rückhaltebereich 2.3 an, auf den die Bürsten in ihrer Montage-Rückhaltestellung gemäß FIG 2, 3 aufliegen. An diesen Rückhaltebereich 2.3 schließt sich radial bündig der eigentliche Abdeckbereich 2.2 der Schutzhaube 2 an.

Bei der gegenseitigen axialen Aufbaumontage der Bürstenhalterung 1 mit im Schiebe-Klemmsitz gehaltener Schutzhülse 2⁻ einerseits und des rotorseitigen, insbesondere zuvor mit der ihn aufnehmenden Rotorwelle 4 sowie mit dem mit der Wicklung 5 versehenen Rotorblechpaket 6 in das Motorgehäuses 7 eingesetzten Kommutators 3 andererseits schlägt die rechte Stirnseite des Kommutators 3 an den entsprechend radial abgesetzten Rückhaltebereich 2.3 der Schutzhülse 2 an und verschiebt diese nach rechts, derart daß in der gegenseitigen Betriebs-Endstellung von Kommutator 3 und der Bürstenhalterung 1 die Bürsten 8;9 von dem Rückhaltebereich 2.3 aus ihrer Montage-Rückhaltestellung freigegeben werden und zur Auflage auf die Bürstenschleiffläche des Kommutators 3 gelangen können. Dabei reichen die Bürsten 8;9 durch Bürstenschlitze 2.4 des eigentlichen, die Bürstenschleiffläche gegen Flüssigkeit schützenden Abdeckbereiches 2.2 der Schutzhülse 2.

## Patentansprüche

1. Kommutatormotor mit Montage-Rückhalterung der Bürsten gegenüber dem Kommutator, insbesondere bei von außen nicht zugänglicher Bürstenhalterung,
- mit einer die Bürstenschleiffläche des Kommutators (3) in geringem radialen Abstand umgebenden Schutzhülse (2);
- mit in einer Bürstenhalterung (1) aus einer Montage-Rückhaltestellung in eine Betriebs-Endstellung axial verschiebbarer Schutzhülse (2) ;
- mit bei einer gegenseitigen axialen Montage des Kommutators (3) einerseits und der Bürstenhalterung (1) andererseitsdieBürsten(8;9) zunächst in der Montage-Rückhaltestellung mit radialem Abstand zur Bürstenschleiffläche des Kommutators sichernden und bei Erreichen der gegenseitigen Betriebs-Endstellung von Kommutator und Bürstenhalterung die Bürsten zur Auflage auf der Bürstenschleiffläche freigebender Schutzhülse (2);
- mit einer im Bereich (2.2) der Bürsten (8;9) mit einer entsprechenden Durchsteck-Öffnung, insbesondere mit einem axial offenen Bürstenschlitz (2.4), versehenen Schutzhülse (2).

2. Kommutatormotor nach dem vorhergehenden Anspruch
- mit einer Bürstenhalterung (1) in Form einer ein, insbesondere topfförmiges, Motorgehäuse (7) nach axial außen abschließenden Bürstentragplatte;
- mit auf der motorgehäusezugewandten Stirnfläche der Bürstentragplatte geführt gehaltenen Bürsten (8;9) bzw. Schutzhülse (2).

3. Kommutatormotor nach zumindest einem der vorhergehenden Ansprüche
- mit in einer kommutatorseitig offenen, ringnutartigen Aufnahme (1.3) der Bürstenhalterung (1) axial führbarer bzw. fixierbarer Schutzhülse (3).

4. Kommutatormotor nach dem vorhergehenden Anspruch
- mit relativ zur Bürstenhalterung (1) im Klemm-Schiebesitz führbar gehaltener Schutzhülse (3).

5. Kommutatormotor nach zumindest einem der vorhergehenden Ansprüche 3 bzw. 4
- mit über angeformte Schaberippen (2.5) in der Bürstenhalterung (1) axial führbarer bzw. fixierbarer Schutzhülse (3).

6. Kommutatormotor nach zumindest einem der vorhergehenden Ansprüche
- mit einer Schutzhülse (2) mit einem im Bereich ihrer Führung bzw. Fixierung in der Bürstenhalterung (1) geringerem radial innerem Abstand zur Bürstenschleiffläche des Kommutators (3) als in einem für die eigentliche Schutzabdeckung vorgesehenen Abdeckbereich (2.2).

7. Kommutatormotor nach zumindest einem der vorhergehenden Ansprüche
- mit einer Schutzhülse (3) mit einem im Bereich ihrer Rückhalterung der Bürsten (8;9) geringerem radial innerem Abstand zur Bürstenschleiffläche des Kommutators (3) als in einem für die eigentliche Schutzabdeckung vorgesehenen Abdeckbereich (2.2).

8. Kommutatormotor nach zumindest einem der vorhergehenden Ansprüche
- mit einer als Kunststoff-Spritzgußteil hergestellten Schutzhülse (2) bzw. Bürstenhalterung (1).

9. Kommutatormotor nach zumindest einem der vorhergehenden Ansprüche
- mit bei der gegenseitigen axialen Montage des Kommutators (3) einerseits und der Bürstenhalterung (1) andererseits durch Anschlag des Kommutators (3) aus ihrer Montage-Rückhaltestellung in ihre Betriebs-Endstellung axial verschiebbarer Schutzhülse (2).

## Claims

1. Commutator motor with mounted restraint for the brushes in respect of the commutator, in particular with a brush holder not accessible from outside,
- with a protective sleeve (2) surrounding the brush contact surface of the commutator (3) at a short radial distance;
- with a protective sleeve (2) that can be displaced axially in a brush holder (1) from a mounted restraint position into a final operating position;
- with a protective sleeve (2) first securing the brushes (8;9) in the mounted restraint position at a radial distance from the brush contact surface of the commutator, when the commutator (3) on the one hand and the brush holder (1) on the other hand are mounted axially in a reciprocal manner, and releasing the brushes to rest on the brush contact surface when the commutator and brush holder reach their final operating positions;
- with a protective sleeve (2) provided with a corresponding insertion opening in the area (2.2) of the brushes (8;9), in particular with an axially open brush slot (2.4).

2. Commutator motor according to the preceding claim,
- with a brush holder (1) in the form of a brush support plate sealing an, in particular cup-shaped, motor housing (7) axially outwards;
- with brushes (8;9) or a protective sleeve (2) held in a movable manner on the front face of the brush support plate facing the motor housing.

3. Commutator motor according to at least one of the preceding claims,
- with a protective sleeve (3) that can be moved axially or can be fixed in an annular groove type recess (1.3) of the brush holder (1) open on the commutator side.

4. Commutator motor according to the preceding claim,
- with a protective sleeve (3) that is held and can be moved in relation to the brush holder (1) in the clamping/sliding clearance area.

5. Commutator motor according to at least one of the preceding Claims 3 or 4,
- with a protective sleeve (3) that can be moved axially or fixed in the brush holder (1) by means of molded scraper ribs (2.5).

6. Commutator motor according to at least one of the preceding claims,
- with a protective sleeve (2) at a shorter distance radially inward from the brush contact surface of the commutator (3) in the area of its movement or attachment in the brush holder (1) than in a cover area (2.2) provided for the actual protective cover.

7. Commutator motor according to at least one of the preceding claims,
- with a protective sleeve (3) with a shorter distance radially inwards from the brush contact surface of the commutator (3) in the area of the restraint for the brushes (8;9) than in a cover area (2.2) provided for the actual protective cover.

8. Commutator motor according to at least one of the preceding claims,
- with a protective sleeve (2) or brush holder (1) manufactured as a plastic injection molded component.

9. Commutator motor according to at least one of the preceding claims,
- with a protective sleeve (2) that can be displaced axially from its mounted restraint position into its final operating position, when the commutator (3) on the one hand and the brush holder (1) on the other hand are axially mounted in a reciprocal manner, by contact with the commutator (3).

## Revendications

1. Moteur à collecteur comprenant un dispositif de retenue des balais durant le montage situé face au collecteur, en particulier dans le cas d'un dispositif de retenue des balais non accessible de l'extérieur,
- comprenant une douille protectrice (2) entourant, à une faible distance radiale, la surface de frottement des balais du collecteur (3);
- comprenant une douille protectrice (2) déplaçable axialement dans un dispositif de fixation des balais (1) d'une position de retenue des balais durant le montage vers une position finale de service;
- comprenant une douille protectrice (2) qui, lors d'un montage axial interdépendant du collecteur (3) d'une part et du dispositif de fixation des balais (1) d'autre part, bloque d'abord les balais (8;9) dans la position de montage avec une distance radiale donnée par rapport à la surface de frottement des balais du commutateur et qui, une fois atteinte la position finale de service interdépendante du collecteur et du dispositif de fixation des balais, libère les balais pour les laisser prendre appui sur la surface de frottement des balais;
- comprenant une douille protectrice (2) qui est pourvue dans la zone (2.2) des balais (8;9) d'une ouverture traversante correspondante, en particulier d'une fente de balais (2.4) ouverte axialement.

2. Moteur à collecteur selon la revendication précédente
- comportant un dispositif de fixation des balais (1) réalisé sous la forme d'une plaque porte-balais fermant axialement vers l'extérieur un carter de moteur (7) notamment en forme de pot;
- comprenant des balais (8;9) et une douille protectrice (2), lesquels sont maintenus de manière à être guidés sur la face frontale de la plaque porte-balais tournée vers le carter de moteur.

3. Moteur à collecteur selon au moins l'une des revendications précédentes
- comprenant une douille protectrice (3) pouvant être fixée et guidée axialement dans un logement (1.3), en forme de rainure annulaire et ouvert du côté du collecteur, du dispositif de fixation des balais (1).

4. Moteur à collecteur selon la revendication précédente
- comprenant une douille protectrice (3) maintenue dans l'ajustement pressé-appuyé de manière à pouvoir être guidée par rapport au dispositif de fixation des balais (1).

5. Moteur à collecteur selon au moins l'une des revendications précédentes 3 ou 4
- comprenant une douille protectrice (3) pouvant être guidée axialement et fixée dans le dispositif de fixation des balais (1) par des ailettes-racloirs (2.5) moulées.

6. Moteur à collecteur selon au moins l'une des revendications précédentes
- comprenant une douille protectrice (2) qui présente, dans la zone de guidage et de fixation située à l'intérieur du dispositif de fixation des balais (1), une distance intérieure radiale plus faible par rapport à la surface de frottement des balais du collecteur (3) que dans une zone de recouvrement (2.2) prévu pour le capuchon protecteur proprement dit.

7. Moteur à collecteur selon au moins l'une des revendications précédentes
- comprenant une douille protectrice (3) qui présente, dans la zone de son dispositif de retenue des balais (8;9), une distance intérieure radialement plus faible par rapport à la surface de frottement des balais du collecteur (3) que dans une zone de recouvrement (2.2) prévue pour le capuchon protecteur proprement dit.

8. Moteur à collecteur selon au moins l'une des revendications précédentes
- comprenant une douille protectrice (2) et un dispositif de fixation des balais (1) réalisés sous forme de pièce injectée en matière plastique.

9. Moteur à collecteur selon au moins l'une des revendications précédentes
- comprenant une douille protectrice (2) déplaçable axialement de sa position de retenue durant le montage à sa position finale de service par mise en butée du collecteur (3) lors du montage axial interdépendant du collecteur (3), d'une part, et du dispositif de fixation des balais (1), d'autre part.
